# EUROPEAN PATENT APPLICATION

(11) **EP 2 410 174 A1**
(43) Date of publication of application: **25.01.2012**
(21) Application number: 10172918.4
(22) Date of filing: 16.08.2010
(51) Int. Cl.: F03D 7/02, F03D 7/04

(54) **Method and system for redundant turbine control**

(30) Priority: 21.07.2010 US 840427
(71) Applicant: Clipper Windpower, LLC, Carpinteria CA 93013 (US)
(72) Inventor: Ayres, Lawrence, Summerland, CA 93067 (US)
(74) Representative: Zenz

(57) **Abstract**

A method and system for redundant turbine control is provided. The method includes classifying first and second turbine control units (TCUs) as a primary and secondary TCUs and receiving, in parallel, monitored data from a wind turbine at both the primary TCU and secondary TCU. The primary TCU periodically calculates wind turbine state information based on received monitored data and any previously calculated wind turbine state information, and communicates the wind turbine state information from the primary TCU to the secondary TCU after each computation cycle. The secondary TCU stores the wind turbine state information into memory while the primary TCU sends control messages to the wind turbine.

## Description

### BACKGROUND

The exemplary embodiment relates to a method and system for redundant turbine control.

As wind turbine systems become larger and more complex, the need for more robust turbine control systems increases since the failure of even a single turbine control unit (TCU) can lead to mechanical failures, loss of income and costly repair trips.

Because wind turbine systems often have unique hard real time requirements while operating in challenging environments, redundancy in the turbine control system is desirable. A redundant turbine control system allows for the failure of one or more components while still maintaining real-time control over the wind turbine system. The use of a redundant turbine control system benefits from a system architecture that supports very high speed fail over with little or no latency or loss of data.

### BRIEF DESCRIPTION

In one aspect of the exemplary embodiment, a method for redundant turbine control is provided. The method includes classifying first and second turbine control units (TCUs) as a primary and secondary TCUs and receiving, in parallel, monitored data from a wind turbine at both the primary TCU and secondary TCU. The primary TCU periodically calculates wind turbine state information based on monitored data and any previously calculated wind turbine state information, and communicates the wind turbine state information from the primary TCU to the secondary TCU after each computation cycle. The secondary TCU stores the wind turbine state information into memory while the primary TCU sends control messages to the wind turbine.

In another aspect, a system for redundant turbine control is provided. The system includes a wind turbine, a first and second turbine control unit (TCU) that each include a processor and memory. The system also includes a shared interface between the wind turbine and the first and second TCUs operative to communicate analog or digital data from the wind turbine to the first and second TCUs in parallel. The system is operative to classify the first and second TCUs as primary and secondary TCUs, respectively, wherein the primary TCU is operative to periodically calculate wind turbine state information based on received monitored data received from the wind turbine and any previously calculated wind turbine state information, communicate the calculated wind turbine state information from the primary TCU to the secondary TCU, and send control messages to the wind turbine. The secondary TCU is operative to store calculated wind turbine state information received from the primary TCU into memory.

### BRIEF DESCRIPTION OF THE DRAWINGS

FIGURE 1A is a schematic of a high-level overview of an exemplary redundant turbine control system that includes primary and secondary turbine control units and an optical interface board;

FIGURE 1B is a schematic of a high-level overview of the exemplary redundant turbine control system of FIGURE 1A with the digital and ethernet lines replaced with an optical ring structure;

FIGURE 2 illustrates in more detail the optical interface board of the system illustrated in FIGURES 1A and 1B;

FIGURE 3 is a machine state diagram illustrating the active and standby states of each TCU of FIGURE 1A; and

FIGURE 4 is a flow diagram illustrating the operations performed by the exemplary system of FIGURES 1A and 1B.

### DETAILED DESCRIPTION

Disclosed herein are a method and system for redundant turbine control. As used herein, "wind turbine" and "turbine" refer to any rotary device that extracts energy from a moving fluid, such as the wind.

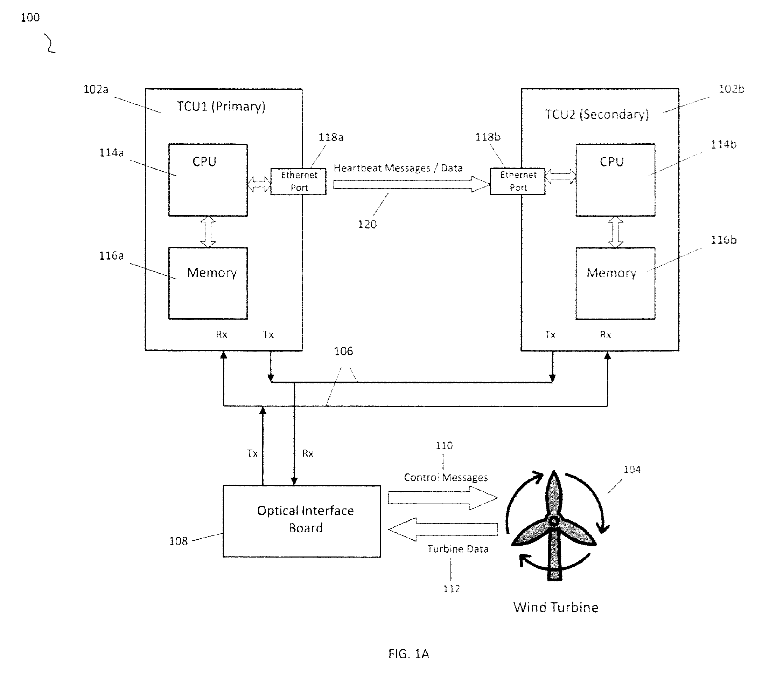

With reference to FIGURE 1A, an exemplary system architecture for a redundant turbine control system 100 is illustrated. The system 100 includes a primary turbine control unit (TCU) 102a and a secondary TCU 102b. Each TCU 102a, 102b contains the same (and/or interchangeable) firmware and is capable of functioning as either the primary or secondary TCU. The TCUs 102a, 102b operate to control and receive data from a wind turbine 104 through fully redundant analog and digital lines 106 optionally connected through a shared interface such as an optical interface board 108 or via one or more conventional Y shaped cables (not shown). Specifically, both TCUs 102a, 102b are operational to send periodic control messages 110 to the wind turbine 104 in order to control its operation. TCUs 102a, 102b also receive turbine data 112 from the wind turbine 104 that represents the current state of the wind turbine 104. Each TCU 102a, 102b has a CPU 114a, 114b or other processing device that communicates with both data memory 116a, 116b and a communication port such as ethernet port 118a, 118b. The CPU 114a, 114b of each TCU 102a, 102b, in tandem with TCU memory 116a, 116b, operates software that is capable of, among other things, initiating heartbeat messages (i.e., messages indicating system health), reading and analyzing the analog and digital data 112 received from the wind turbine 104, maintaining state machines for the turbine control system, and issuing commands 110 to control and operate the wind turbine 104.

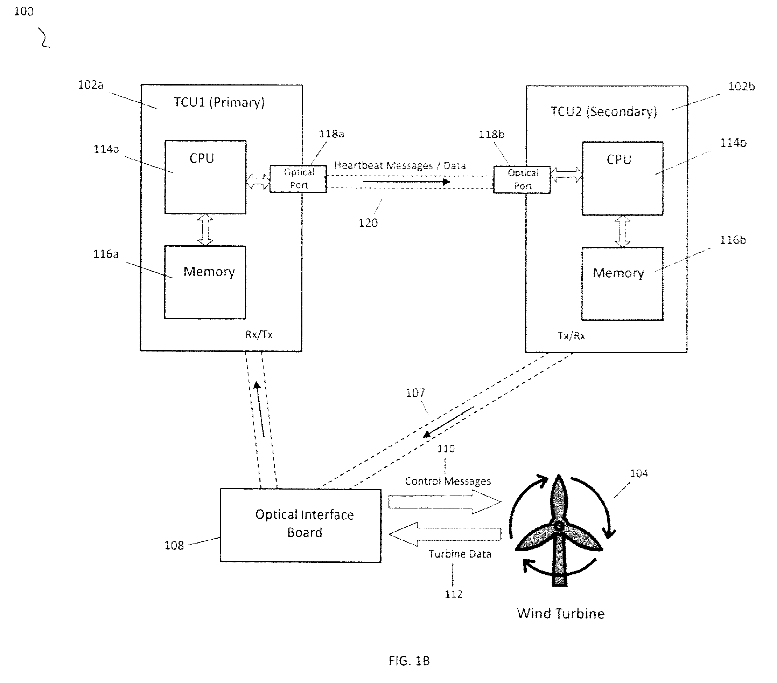

In normal operation (e.g., when there has been no failure in the system 100), the CPU 114a of the primary TCU 102a sends periodic heartbeat messages and data to the secondary TCU 102b via a channel or communication link 120 between the TCUs' respective ethernet ports 118a, 118b. In alternate embodiments, a peripheral component interface (PCI) bus and/or data network interface such as an optical ring interface 107 shown in FIGURE 1B, wireless interface, etc is used instead of ethernet ports 118a, 118b and/or digital lines 106. The use of an optical ring interface 107 may be beneficial over the use of an electrical interface such as ethernet since there may be less interference from an electrically noisy environment such as a wind turbine system. The periodic messages are sent by the primary TCU 102a after every computation cycle (for example, around every 20-50ms) and contain current state machine information of the wind turbine 104 as calculated by the primary TCU 102a. A heartbeat message is a message sent from the primary TCU 102a to the secondary (redundant) TCU 102b indicating two things: 1) that the primary TCU 102a is alive, and 2) that a consistent set of wind turbine data has been processed properly by the primary TCU 102a. The latter indication at least allows for a failover from a known state. The heartbeat message may be a unique signal sent from the primary TCU 102a to the secondary TCU 102b, or it may be the mere presence of a periodic message (such as a message containing calculated wind turbine state information) sent to the secondary TCU 102b. The communication link 120 between the TCUs 102a, 102b may be as simple as a common cable or may be in the form of an optical link and/or networked communication device.

At a basic level, when the primary TCU 102a becomes non-operational for any reason, it will stop sending messages to the secondary TCU 102b. If the secondary TCU 102b does not receive a heartbeat message during a certain time interval (polling interval), the secondary TCU 102b takes over the functionality of the primary TCU 102a using previously stored state information and the real-time data from the wind turbine 104 routed through the optical interface board 108. Thus, when the primary TCU 102a fails, the redundant secondary TCU 102b seamlessly takes over control of the wind turbine 104. In one embodiment, the polling interval is larger than the expected processing cycle time. For example, if a processing cycle is expected to take 50ms, then the polling interval may be 60ms. In alternate embodiments, the polling interval may be equal to or shorter than the processing cycle time.

As will be appreciated, the TCUs 102a, 102b may comprise one or more computing devices, such as a personal computer, PDA, control card, or a combination thereof. Memory 116a, 116b may be integral or separate and may represent any type of computer readable medium including, but not limited to, random access memory (RAM), dual port RAM, read only memory (ROM), magnetic disk or tape, optical disk, flash memory, or holographic memory. The use of dual port RAM has the advantage of allowing each TCU CPU 114a, 114b to simultaneously compute and write state machine and other calculated data to memory 116a, 116b while at the same time reading the data so that it can be sent to the redundant TCU in practically real-time. The dual port RAM can also simultaneously write information received from the shared interface 108 while other operations are being performed by the CPU 114a, 114b. In one embodiment, a direct memory access (DMA) controller on each TCU 102a, 102b allows for direct communication between the dual port memory on each TCU. In other words, dual port RAM, in conjunction with a DMA controller, allows for the almost instantaneous transfer of all state machine states, intermediate and recurring calculations and current system operating parameters from the primary TCU 102a to the secondary TCU 102b. This feature ensures that the secondary TCU 102b is able to assume control of the wind turbine 104 in a quick and seamless manner if the primary TCU 102a suffers a failure. However, in the event that dual port RAM is not available, conventional RAM is still useful when employed in conjunction with the other components of the exemplary system 100.

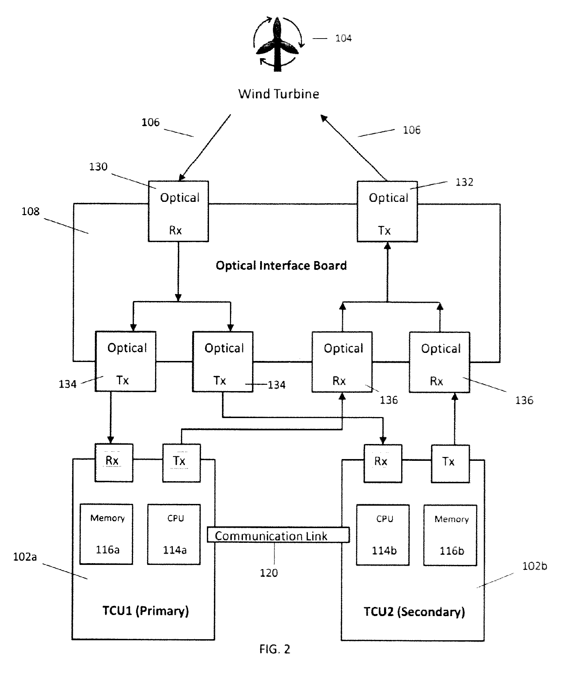

With reference to FIGURE 2, an exemplary shared interface in the form of an optical interface board 108 is illustrated. As will be appreciated, the shared interface may be any embodiment functional to manage digital and/or analog electrical signals and/or optical signals such that the signals are delivered in a bidirectional manner between TCUs 102a, 102b and the wind turbine 104. The signals may include RS-232 and RS-485 messages over wire or fiber, analog voltages and digital (on/off) signals. The exemplary optical interface board 108 contains an optical input device 130 for receiving data from the wind turbine 104, and an optical output device 132 for transmitting control data to the wind turbine 104. When the optical interface board 108 receives data from the wind turbine 104 through the optical input device 130, the data is delivered to the TCUs 102a, 102b concurrently through the transmit devices 134 to each TCU 102a, 102b. Conversely, when the optical interface board 108 receives control information from either TCU 102a, 102b via either receiver device 136, the control information is conveyed to the wind turbine 104 via the optical output device 132. In this manner, any signals (such as turbine data 112) received by the optical interface board 108 from the wind turbine 104 are passed in parallel to each TCU 102a, 102b, and any signals sent by either TCU 102a, 102b are forwarded immediately to the wind turbine 104.

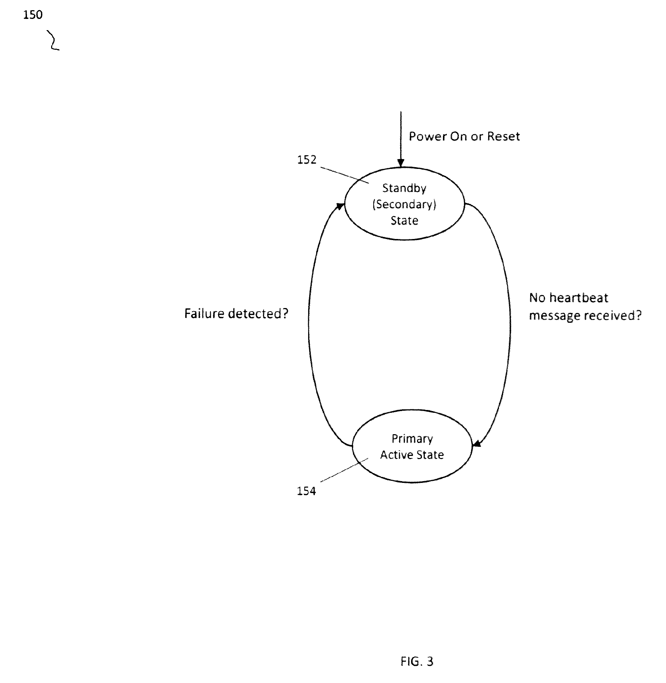

With reference to FIGURE 3, an exemplary state machine 150 running on each TCU 102a, 102b is illustrated. For explanatory purposes, it is assumed that the primary TCU 102a is powered on before the secondary TCU 102b. The initial state 152 represents the state of a secondary TCU (i.e., standby), whereas state 154 represents the state of a primary (i.e., active) TCU. When the first TCU 102a is powered on, it is at the standby state 152. However, after a polling interval has lapsed without the receipt of a heartbeat message, the first TCU 102a will transition to state 154 and become the primary TCU and begin sending heartbeat messages. Later, when the second TCU 102b is powered on, it will initially be in standby state 152. Because the primary TCU 102a is now sending heartbeat messages, the secondary TCU 102b will remain in standby state 152 until a failure causes the primary TCU 102a to cease sending heartbeat messages. Note that in some embodiments, the polling interval upon an initial power on or reset will be longer than the polling interval during subsequent operation in order to allow time for initial system initialization (such as powering up the CPU, RAM, etc). Additionally, some embodiments may determine the default primary and secondary TCUs by using a state machine such as that described above in conjunction with a jumper or DIP switch present on each TCU.

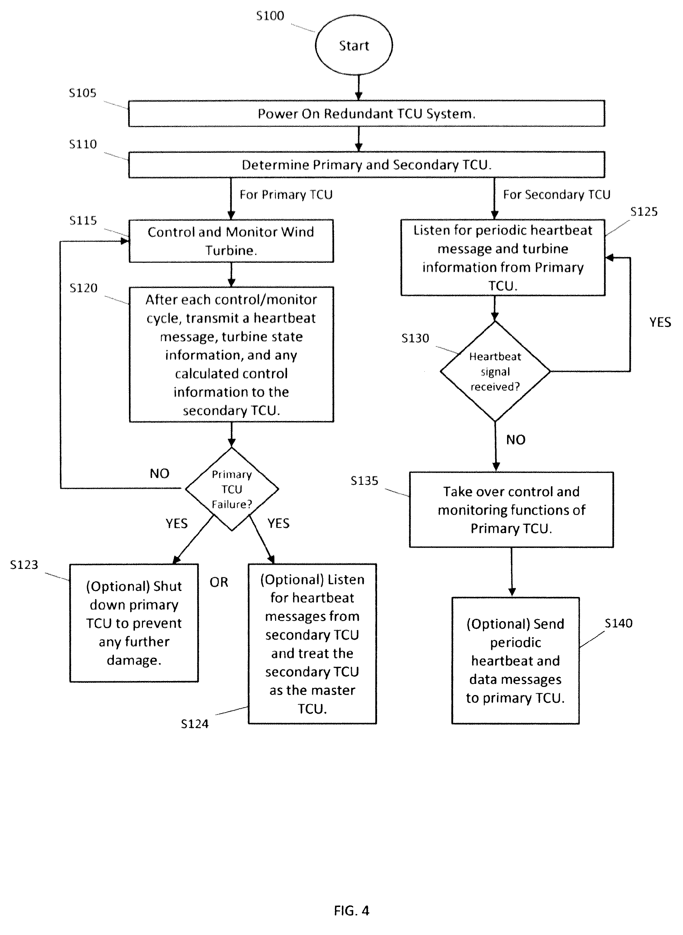

With reference to FIGURE 4, an exemplary method for redundant turbine control is illustrated. The method may employ the system 100 illustrated in FIGURE 1A. It is to be appreciated that the exemplary method may include fewer, more, or different steps from those shown and need not necessarily proceed in the order illustrated. The method illustrated in FIGURE 4 may have portions implemented in a computer program product that may be executed on a computer. The computer program product may be a tangible computer-readable recording medium (such as a disk or other memory storage device) on which a control program is recorded, or may be a transmittable carrier wave in which the control program is embodied as a data signal. The illustrated method may be entirely automated or may include some user input, as noted herein.

The method begins at step S100. At step S105, both TCUs 102a, 102b are powered on and/or reset either automatically or through user input.

At step S110, each TCU 102a, 102b is classified as either a primary or secondary TCU. The primary and secondary TCUs may be determined using a state machine 150 as illustrated by FIGURE 3. Alternatively, the default primary and secondary TCUs may be determined by a jumper or DIP switch present on each TCU. Yet another alternative is to configure programmed ROM on each TCU to determine the default classification. A SCADA (supervisory control and data acquisition) variable in each card will indicate that the currently active TCU card is the primary or secondary TCU, allowing individuals monitoring the system remotely to be aware of the status of the system. The method then proceeds to step S115 for the primary TCU 102a and step S125 for the secondary TCU 102b.

At step S115, the primary TCU 102a continuously and/or periodically controls and monitors the wind turbine 104 and any of its subsystems by sending and receiving data via shared interface 108. Control messages sent from the primary TCU 102a to the wind turbine 104 include, but are not limited to, pitch control, generator control, brake control, heating and cooling control, yaw control, tower height, etc. Wind turbine data that is monitored by the primary TCU 102a includes, but is not limited to, hub speed, wind speed, generator speed, gearbox shaft speeds, tower vibration, generator temp, air temp, gearbox oil temp, bearing temp, subsystem faults, etc.

At step S120, the primary TCU 102a enters into a processing loop that continuously and/or periodically processes the monitored data received from the wind turbine 104. Processing of the monitored data includes, but is not limited to, determining the health of the wind turbine system 100 and computing intermediate and recurring calculations based on received wind turbine data 112 that are used to determine future control messages. An example of an intermediate calculation is average power generated, which may be calculated based on the monitored data. The length of a processing cycle will vary according to hardware specifications and environmental factors. After each processing cycle, the primary TCU 102a sends a heartbeat message to the secondary TCU 102b via ethernet ports 118a, 118b (or any other suitable means such as through a device utilizing DMA) containing wind turbine state information that may include intermediate and recurring calculations that will be needed for the next processing cycle. In the exemplary embodiment, the entire set of wind turbine state information is sent from the primary TCU 102a to the secondary TCU 102b. In another embodiment, only incremental changed wind turbine state information is sent.

At optional step S123, upon detection of a failure at the primary TCU 102a, the primary TCU 102a is shut down to prevent interference with the secondary TCU 102b and to prevent further damage to the redundant control system 100. Upon detection of a failure, a message is sent from the secondary TCU 102b to the primary TCU 102a via communication link 120 that operates to shut down the primary TCU 102a.

Optional step S124 is presented as an alternative to optional step S123. At step S124, the primary TCU 102a listens for heartbeat messages from the secondary TCU 102b as performed at step S125. In essence, although the primary TCU 102a is labeled as the primary TCU, it becomes functional as a secondary TCU. In the event that the previous primary TCU failure is recoverable or has been recovered, the primary TCU 102a may act as a failsafe for the secondary TCU 102b which is now controlling and monitoring the wind turbine 104.

At step S125, the secondary TCU 102b listens for periodic heartbeat and data messages containing wind turbine state information from the primary TCU 102a during successive polling intervals. As state information is received from the primary TCU 102a, the secondary TCU 102b stores the state information in memory 116b so that the information is readily accessible if necessary.

At step S130, if a polling interval has passed and no heartbeat message has been received, then the secondary TCU 102b assumes that a failure has occurred with respect to the primary TCU 102a. The secondary TCU 102b then halts listening for periodic heartbeat and data messages and proceeds to step S135.

At step S135, the secondary TCU 102b begins controlling and monitoring the wind turbine 104 as if it were the primary TCU 102a. Since all of the inputs and outputs with respect to the wind turbine 104 are shared between the TCUs 102a, 102b, and all of the required state and runtime data is shared between the TCUs, there is no disruption of operation. If the secondary TCU 102b is operating as the primary TCU 102a (such as when a failure occurs), a service call to fix the primary TCU 102a should be combined with the next scheduled maintenance.

At optional step S140, the secondary TCU 102b sends periodic heartbeat and data messages to the primary TCU 102a in a manner similar to step S120. In essence, although the secondary TCU 102b is labeled as the secondary TCU, it becomes functional as a primary TCU. In the event that the previous primary TCU failure is recoverable or has been recovered, the primary TCU 102a may act as a failsafe for the secondary TCU 102b which is now controlling and monitoring the wind turbine 104.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

## Claims

1. A method for redundant turbine control, comprising:
classifying a first turbine control unit (TCU) as a primary TCU;
classifying a second turbine control unit (TCU) as a secondary TCU;
receiving, in parallel, monitored data from a wind turbine at both the primary TCU and secondary TCU;
periodically calculating wind turbine state information in the primary TCU based on the received monitored data and any previously calculated wind turbine state information, wherein each period is a computation cycle;
communicating the wind turbine state information from the primary TCU to the secondary TCU after each computation cycle;
at the secondary TCU, storing the wind turbine state information into memory; and
sending control messages from the primary TCU to the wind turbine.

2. The method of claim 1, further comprising sending a heartbeat message from the primary TCU to the secondary TCU at substantially the same time as the communication of the wind turbine state information from the primary TCU to the secondary TCU.

3. The method of claim 1, further comprising:
at the secondary TCU, listening for incoming wind turbine state information from the primary TCU;
wherein, if incoming wind turbine state information is not received at the secondary TCU within a single polling interval, performing the following:
periodically calculating wind turbine state information in the secondary TCU based on the received monitored data from the wind turbine and the previously received wind turbine state information from the primary TCU; and
periodically sending control messages from the secondary TCU to the wind turbine.

4. The method of claim 3, wherein the duration of the single polling interval is greater than or equal to the duration of a computation cycle.

5. The method of claim 3, further comprising shutting down the primary TCU after incoming wind turbine state information is not received at the secondary TCU within a single polling interval.

6. The method of claim 3, further comprising, at the primary TCU, listening for incoming wind turbine state information from the secondary TCU.

7. The method of claim 3, further comprising sending wind turbine state information from the secondary TCU to the primary TCU after a failure of the primary TCU is detected.

8. The method of claim 1, wherein the classification of the first and second TCUs is based at least in part on a state machine.

9. The method of claim 1, wherein the classification of the first and second TCUs is based at least in part on the setting of a jumper or DIP switch on at least one TCU.

10. A system for redundant turbine control, the system comprising:
a wind turbine;
a first and a second turbine control unit (TCU), each TCU comprising a processor and memory; and
a shared interface between the wind turbine and the first and second TCUs operative to communicate analog or digital data from the wind turbine to the first and second TCUs in parallel, wherein the first TCU is classified as a primary TCU and the second TCU is classified as a secondary TCU and the primary TCU is operative to:
periodically calculate wind turbine state information based on received monitored data received from the wind turbine and any previously calculated wind turbine state information;
communicate the calculated wind turbine state information from the primary TCU to the secondary TCU; and
send control messages to the wind turbine, wherein the secondary TCU is operative to store calculated wind turbine state information received from the primary TCU into memory.

11. The system of claim 10, wherein the secondary TCU is further operative to:
listen for incoming wind turbine state information from the primary TCU, wherein if incoming wind turbine state information is not received at the secondary TCU within a single polling interval, performing the following:
periodically calculate wind turbine state information in the secondary TCU based on the received monitored data from the wind turbine and the previously received wind turbine state information from the primary TCU; and
periodically send control messages from the secondary TCU to the wind turbine.

12. The system of claim 10, the system further comprising an optical connection between the primary TCU and secondary TCU;
wherein the primary TCU communicates wind turbine state information to the secondary TCU via the optical connection.

13. The system of claim 10, the system further comprising at least one of:
an ethernet port,
a peripheral component interface (PCI) device, and
a data network interface.

14. The system of claim 10, wherein the shared interface between the wind turbine and the first and second TCUs is an optical interface comprising:
an optical input device for receiving data from the wind turbine; and
an optical output device for transmitting control data to the wind turbine, wherein data received from the wind turbine through the optical input device is delivered to the first and second TCU in parallel.

15. The system of claim 10, wherein the first and second TCUs contain interchangeable firmware such that each is capable of functioning as either the primary or secondary TCU.

16. The system of claim 10, wherein the primary TCU is operative to communicate wind turbine state information to the secondary TCU in a manner involving dual port RAM.

17. The system of claim 10, further comprising an optical ring connection between the first and second TCUs and the shared interface.

18. A system for redundant turbine control, comprising:
a wind turbine;
a first and a second turbine control unit (TCU), each TCU comprising:
a processor,
dual port memory, and
direct memory access (DMA) controller; and
a shared interface between the wind turbine and the first and second TCUs.

19. The system of claim 18, wherein the shared interface is operative to communicate analog or digital data from the wind turbine to the first and second TCUs; and
wherein the first TCU is operative to:
periodically calculate wind turbine state information based on monitored data received from the wind turbine and any previously calculated wind turbine state information; and
communicate the calculated wind turbine state information from the first TCU to the dual port memory of the secondary TCU via the DMA controller.

20. The system of claim 18, further comprising an optical ring interface operative to communicate information from the first TCU to the second TCU.
